# EUROPÄISCHE PATENTSCHRIFT

(11) **EP 2 334 740 B1**
(45) Veröffentlichungstag und Bekanntmachung des Hinweises auf die Patenterteilung: **28.11.2012**
(21) Anmeldenummer: 09783482.4
(22) Anmeldetag: 28.09.2009
(51) Int. Cl.: C09B 29/00, C09B 29/36, C09B 62/51, D06P 3/32

(54) **MONOAZOFARBSTOFFE FÜR DIE LEDERFÄRBUNG**
MONOAZO DYES FOR DYEING LEATHER
COLORANTS MONOAZOÏQUES DESTINÉS À LA COLORATION DU CUIR

(30) Priorität: 29.09.2008 EP 08165402
(43) Veröffentlichungstag der Anmeldung: 22.06.2011
(73) Patentinhaber: BASF SE, 67056 Ludwigshafen (DE)
(72) Erfinder: VOGEL, Till, 68219 Mannheim (DE); MEIER, Stefan, 67061 Ludwigshafen (DE); KIESOW, Harald, 69469 Weinheim (DE); KONDARDI, Helena, 67061 Ludwigshafen (DE); SOMOGYI, Laszlo, H-1121 Budapest (HU)
(86) Internationale Anmeldenummer: PCT/EP2009/062523
(87) Internationale Veröffentlichungsnummer: WO 2010/034832

(56) Entgegenhaltungen:
- EP-A1- 0 134 192
- CN-A- 1 164 549
- DE-A1- 2 142 727
- GB-A- 1 413 250
- JP-A- 58 160 360
- JP-A- 59 174 649

## Beschreibung

Die vorliegende Erfindung betrifft Monoazofarbstoffe, die in besonderer Weise für die Lederfärbung geeignet sind und die einem damit gefärbten Leder eine gelbe Färbung mit herausragenden Echtheiten verleihen.

Die Färbung von gegerbtem Leder erfolgt derzeit überwiegend mit sauren Farbstoffen, Direktfarbstoffen, Schwefelfarbstoffen oder basischen Farbstoffen. Die Erzielung hoher Farbintensitäten und hoher Farbbeständigkeiten, insbesondere hoher Nass- und Schweißechtheiten, ist mit diesen Farbstoffen schwierig und kann für mittlere bis hohe Farbtiefen nicht befriedigend gelöst werden.

Um die Nass- und Schweißechtheiten zu verbessern, wird das Leder häufig mit kationischen Komplexierungsmitteln behandelt, um den Farbstoff auf dem Leder zu komplexieren und so seine Löslichkeit bei Kontakt mit Wasser zu vermindern. Die erzielbaren Nass- und Schweißechtheiten und Abriebbeständigkeiten sind jedoch für intensive Farbnuancen nicht ausreichend. Ferner neigen daraus gefertigte Lederartikel beim Gebrauch zu Abfärbungen. Das Erzielen hoher Echtheiten bei mittleren bis hohen Farbtiefen erfordert zudem eine sehr sorgfältige Farbstoffauswahl und die Abstimmung des eingesetzten Farbstoffs mit den eingesetzten Lederhilfsmitteln, weiterhin spezielle Fettungsmittel und eine Nachgerbstoffauswahl. Zudem ist es in der Regel zur Erzielung der gewünschten Echtheiten erforderlich, Farbstoff und Fettungsmittel und in einigen Fällen auch den Nachgerbstoff in getrennter Flotte zu applizieren, was naturgemäß eine Verlängerung der Gesamtprozessdauer und einen verstärkten Anfall von Abwasser zur Folge hat.

Bei der Lederfärbung ergibt sich zudem das Problem, dass die zur Verfügung stehenden Farbstoffe, die zur Herstellung intensiver Färbungen geeignet sind, häufig nicht die gewünschte Farbnuance aufweisen und daher mit anderen Farbstoffen kombiniert werden müssen. Hierbei ergibt sich jedoch das Problem, dass aufgrund des unterschiedlichen färberischen Verhaltens der Farbstoffe, vor allem aber wegen der stark voneinander abweichenden Farbstoffaffinität von Fleisch- und Narbenseite des Leders eine egale Färbung mit Farbstoffmischungen in der Regel nicht erreicht wird und häufig fleckige Färbungen erhalten werden (siehe auch K. Eitel, in Bayer Farbe Revue, Sonderheft 19, S. 31 (1981)).

Aus der WO 2005/040490 und der WO 2005/121439 sind Verfahren zum Färben von Leder bekannt, bei denen Farbstoffe oder Farbstoffgemische bei schwach alkalischen pH-Werten eingesetzt werden, wobei die Farbstoffe Vinylsulfon-Gruppen oder funktionelle Gruppen, die in Vinylsulfon-Gruppen überführt werden können, aufweisen. Grundsätzlich werden durch diese dort beschriebenen Verfahren gefärbte Leder mit guten Echtheiten erzielt. Allerdings sind dort beschriebenen Gelbfarbstoffe bezüglich ihren Echtheiten, insbesondere ihrer Nass-, Schweiß-, Reib- und/oder Lichtechtheit, ihrer Farbbrillanz und/oder ihrer Kombinierbarkeit mit anderen Farbstoffen nicht zufriedenstellend.

Ein technisch wichtiger Gelbfarbstoff, welcher prinzipiell für die Lederfärbung unter den in WO 2005/121439 beschriebenen Bedingungen geeignet ist, ist Remazol^{®} Brillantgelb GL, welches einen alkalisch aktivierbaren Reaktivanker aufweist. Dieser Farbstoff weist jedoch bei Applikation auf Leder unzufriedenstellende Nass- und Schweißechtheiten auf.

Die JP 58160360 beschreibt Monoazofarbstoffe der Formel 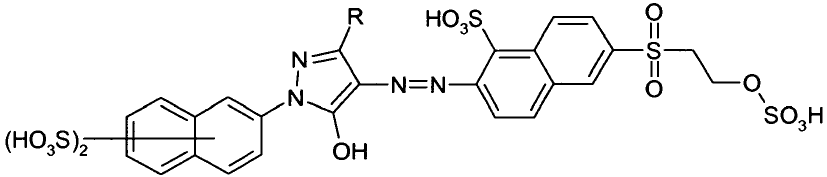 worin R für Methyl, COOH oder Carboxyethyl steht. Diese Farbstoffe werden für die Färbung von Cellulosefasern vorgeschlagen. Sie weisen jedoch unerwünschte grüne Farbnuancen auf und weisen bei der Lederfärbung bezüglich ihrer Echtheiten und/oder ihrer Kombinierbarkeit mit anderen Farbstoffen Nachteile auf.

Aus der EP 134192 wiederum sind unter anderem gelbe Monoazo-Reaktivfarbstoffe bekannt, die eine an einen Phenylring gebundene 1-Propenylsulfonyl- oder 3-Propenylsulfonylgruppe aufweisen. Diese Farbstoffe werden zur Färbung von cellulosehaltigen Fasermaterialien nach dem Kaltverweilverfahren vorgeschlagen. Bei der Lederfärbung sind die mit diesen Farbstoffen erreichten Echtheiten unzufriedenstellend.

Der vorliegenden Erfindung liegt daher die Aufgabe zugrunde, einen gelben Farbstoff bereitzustellen, der zum Färben von Leder geeignet ist. Insbesondere soll ein mit diesem Farbstoff gefärbtes Leder hohe Echtheiten, insbesondere hohe Licht-, Nass- und Schweißechtheiten aufweisen. Zudem sollte ein mit diesem Farbstoff gefärbtes Leder auch bei hoher Farbtiefe eine gleichmäßige Färbung aufweisen. Außerdem sollte der Farbstoff sich mit anderen Farbstoffen kombinieren lassen und eine Kombinationsfärbungen des Leders ermöglichen, die auch bei hoher Farbtiefe eine gleichmäßige Färbung aufweisen.

Es wurde überraschenderweise gefunden, dass diese und weitere Aufgaben durch die im Folgenden beschriebenen Monoazofarbstoffe der Formel I und ihre Salze, insbesondere ihre Ammonium- und Alkalimetallsalze gelöst werden.

Die vorliegende Erfindung betrifft daher Monoazofarbstoffe der allgemeinen Formel I 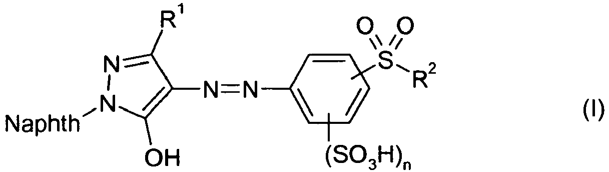 worin
- n: für 0, 1 oder 2 steht;
- R¹: für Wasserstoff, C₁-C₄-Alkyl, COOH, C₁-C₄-Alkoxycarbonyl, C₁-C₄-Alkoxy, CN oder Halogen steht;
- R²: für eine Gruppe -CH=CH₂ oder CH₂-CH₂-Q steht, worin Q für eine unter alkalischen Bedingungen abspaltbare Gruppe steht,
Naphth für einen Rest der Formel X oder Y steht, 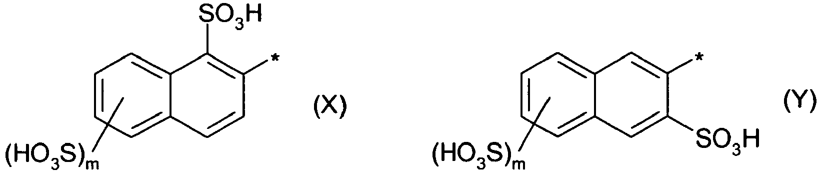 worin
- m: für 0, 1 oder 2 steht und * die Verknüpfung mit dem Stickstoff des Pyrazolrings bedeutet;
und die Salze davon.

Die erfindungsgemäßen Farbstoffe der allgemeinen Formel I und ihre Salze sind in besonderer Weise zum Färben von Leder geeignet und verleihen dem Leder eine intensive gelbe Färbung. Die mit diesen Farbstoffen gefärbten Leder zeichnen sich durch hohe Echtheiten, insbesondere hohe Licht-, Nass- und Schweißechtheiten aus. Zudem weist ein mit diesem Farbstoff gefärbtes Leder auch bei hoher Farbtiefe eine gleichmäßige und egale Färbung auf. Außerdem lassen sich die erfindungsgemäßen Farbstoffe zusammen mit anderen Farbstoffen in Kombinationsfärbungen von Leder einsetzen, wobei die Kombinationsfärbungen bei hoher Farbtiefe dem Leder eine gleichmäßige Färbung verleihen.

Die zur Definition der Reste in Formel I verwendeten Begriffe: Halogen, Alkyl, Alkoxy, Alkoxycarbonyl sind Sammelbegriffe für individuelle Substituenten, wobei das Präfix Cₙ-Cₘ die Anzahl der Kohlenstoffatome wiedergibt.

Dementsprechend bedeuten:
Halogen: Fluor, Chlor, Brom oder Iod, insbesondere Chlor;
C₁-C₄-Alkyl: Methyl, Ethyl, Propyl, Isopropyl, n-Butyl, 2-Butyl, Isobutyl (2-Methyl-1-propyl) oder tert.-Butyl (2-Methyl-2-propyl);
C₁-C₄-Alkoxy: ein über Sauerstoff gebundenes C₁-C₄-Alkyl, z.B. Methoxy, Ethoxy, Propyloxy, Isopropyloxy, n-Butoxy, 2-Butoxy, Isobutoxy (2-Methyl-1-propyloxy) oder tert.-Butoxy (2-Methyl-2-propyloxy);
C₁-C₄-Alkoxycarbonyl: ein über eine Carbonylgruppe gebundenes C₁-C₄-Alkoxy, z.B. Methoxycarbonyl, Ethoxycarbonyl, Propyloxycarbonyl, Isopropyloxycarbonyl, n-Butoxycarbonyl, 2-Butoxycarbonyl, Isobutoxycarbonyl (2-Methyl-1-propyloxycarbonyl) oder tert.-Butoxycarbonyl (2-Methyl-2-propyloxycarbonyl).

Die Erfindung umfasst Farbstoffe der Formel I in Form der freien Säure, wie dargestellt, sowie die Salze von I, d.h. Verbindungen der Formel I, in der ein Teil oder alle der im Molekül vorhandenen Sulfonsäuregruppen in anionischer, d.h. neutralisierter Form vorliegen. Häufig liegt der Farbstoff in Form eines Salzes vor, worin im Mittel wenigstens eine der vorhandenen Sulfonsäuregruppe in neutralisierter Form vorliegt. Vorzugsweise beträgt der Neutralisationsgrad von I wenigstens 25 %, bezogen auf alle Säuregruppen im Molekül. Die zur Ladungsneutralität von I notwendigen Kationen sind üblicherweise ausgewählt unter Alkalimetallionen, wie Natrium, Kalium oder Lithium, unter Erdalkalimetallionen wie Calcium oder Magnesium sowie unter Ammoniumionen, die beispielsweise von Ammoniak oder organischen Aminen, z.B. Alkanolaminen, Dialkanolaminen oder Trialkanolaminen wie Ethanolamin, Diethanolamin, Triethanolamin, Dimethylethanolamin etc. abgeleitet sind.

In Formel I steht Q für eine unter alkalischen Bedingungen abspaltbare Gruppe. Unter einer unter alkalischen Bedingungen abspaltbaren Gruppe Q versteht man Reste, die unter alkalischen Bedingungen, d.h. bei pH-Werten von 7,5 oder darüber, unter Eliminierung unter Ausbildung einer Vinylsulfongruppe abgespalten werden. Beispiele für derartige Gruppen sind Halogen, z.B. Chlor, Brom oder Iod, weiterhin -O-SO₃H, -S-SO₃H, Dialkylamino, quartäres Ammoniumreste wie Tri-C₁-C₄-alkylammonium, Benzyldi-C₁-C₄-alkylammonium oder N-gebundenes Pyridinium, sowie Reste der Formeln R³S(O)₂-, R⁴S(O)₂-O-, R⁵C(O)-O-. Hierin stehen R³, R⁴ und R⁵ unabhängig voneinander für C₁-C₄-Alkyl, C₁-C₄-Halogenalkyl oder gegebenenfalls substituiertes Phenyl (z.B. für unsubstituierte oder für 1-, 2- oder 3-fach durch C₁-C₄-Alkyl, Halogen, Nitro, CN, C₁-C₄-Halogenalkyl, C₁-C₄-Alkoxy oder SO₃H substituiertes Phenyl), wobei R⁵ auch Wasserstoff bedeuten kann. Bevorzugt steht Q für eine Gruppe -O-(CO)CH₃ und insbesondere für -O-SO₃H.

In bevorzugten Ausführungsformen der vorliegenden Erfindung haben die Variablen n, Naphth, R¹ und R² unabhängig voneinander und insbesondere in beliebiger Kombination eine der folgenden bevorzugten Bedeutungen:
- n: steht für 0 oder 1, insbesondere 1;
- R¹: steht für CH₃, CO₂CH₃, CO₂CH₂CH₃ oder COOH. In einer bevorzugten Ausführungsform der Erfindung steht R¹ für CH₃. In einer ebenfalls besonders bevorzugten Ausführungsform steht R¹ für COOH;
- R²: steht für eine Gruppe CH₂-CH₂-Q, worin Q die zuvor genannten, insbesondere die als bevorzugt genannten Bedeutungen hat, und besonders bevorzugt für eine Gruppe O-SO₃H steht;
- Naphth: steht für einen Rest der Formel X, worin m für 0, 1, oder 2, vorzugsweise für 0 oder 1 und insbesondere für 1 steht. Beispiele für bevorzugte Reste A sind 1,5-Bis(hydroxysulfonyl)-2-naphthyl. Sofern Naphth für Y steht, bedeutet m vorzugsweise 1 oder 2, insbesondere 1. Beispiele für Reste Y sind 3,6-Bis(hydroxysulfonyl)-2-naphthyl und 3,6,8-Tris(hydroxysulfonyl)-2-naphthyl. In einer besonders bevorzugten Ausführungsform der Erfindung steht Naphth für 1,5-Bis(hydroxysulfonyl)-2-naphthyl.

Vorzugsweise ist die Gruppe SO₂R² in meta- oder para-Position, bezogen auf die Azogruppe, an den Phenylring gebunden.

Bevorzugt sind insbesondere Azofarbstoffe der allgemeinen Formel I und ihre Salze, worin die Gruppe 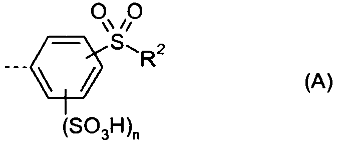 ausgewählt ist unter den Resten der Formeln A1 bis A18:

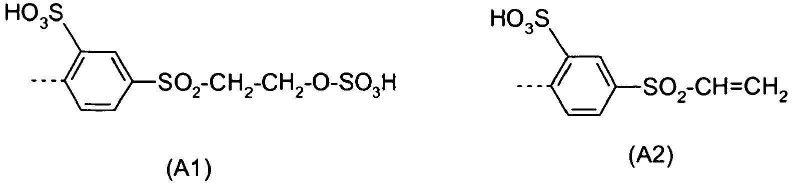

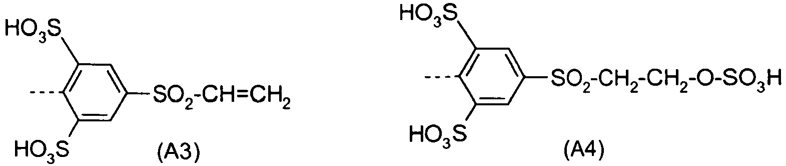

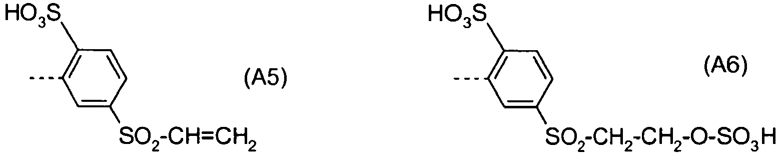

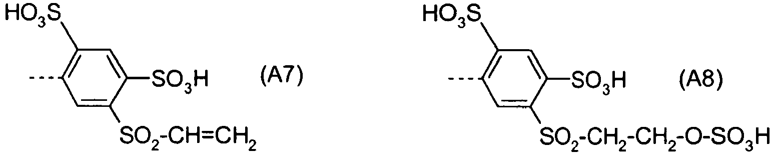

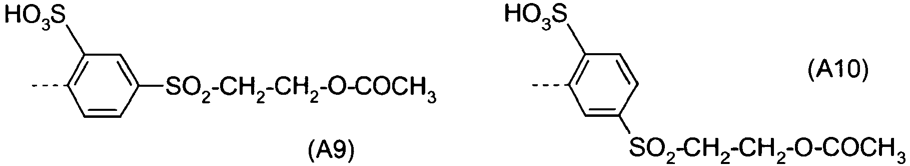

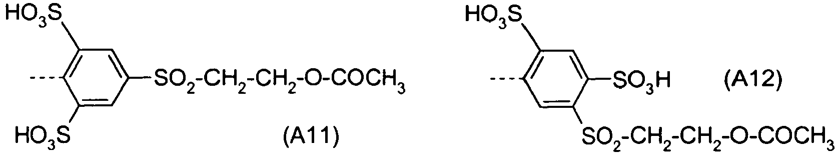

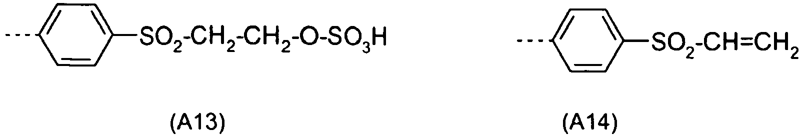

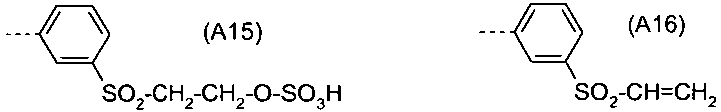

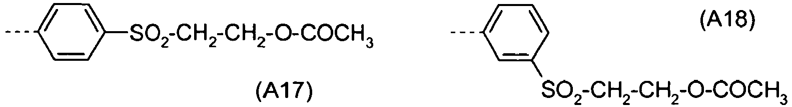

Hierunter sind insbesondere solche Monoazofarbstoffe bevorzugt, worin die Gruppe A ausgewählt ist unter den Resten A1, A8, A13 und A15.

Insbesondere bevorzugt sind Monoazofarbstoffe der allgemeinen Formel I, worin die Gruppe der Formel A ausgewählt ist unter den Resten A1, A8, A13 und A15 und die Reste Naphth und R¹ unabhängig voneinander und insbesondere in beliebiger Kombination eine der folgenden bevorzugten Bedeutungen:
- R¹: steht für CH₃, CO₂CH₃, CO₂CH₂CH₃ oder COOH. In einer bevorzugten Ausführungsform der Erfindung steht R¹ für CH₃. In einer ebenfalls besonders bevorzugten Ausführungsform steht R¹ für COOH.
- Naphth: steht für einen Rest der Formel X, worin m für 0, 1, oder 2, vorzugsweise für 0 oder 1 und insbesondere für 1 steht. Insbesondere ist Naphth ausgewählt unter 1,5-Bis(hydroxysulfonyl)-2-naphthyl und 1-Hydroxysulfonyl-2-naphthyl. In einer besonders bevorzugten Ausführungsform der Erfindung steht Naphth für 1,5-Bis(hydroxysulfonyl)-2-naphthyl.

Die Herstellung der erfindungsgemäßen Azofarbstoffe gelingt in Analogie zu bekannten Verfahren des Standes der Technik durch ein Verfahren, welches die folgenden Schritte umfasst:
a) Diazotieren einer Anilinverbindung der Formel II 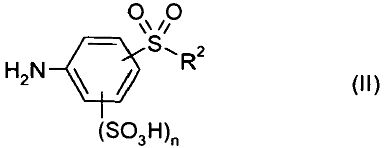 oder eines Salzes von II, worin n und R² die zuvor angegebenen Bedeutungen aufweisen, wobei man das Diazoniumsalz von II erhält, und
b) Kuppeln des Diazoniumsalzes von II auf eine Verbindung der Formel III, 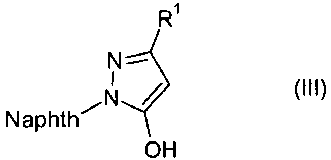 worin Naphth und R¹ die zuvor angegebenen Bedeutungen aufweisen.

Verfahren zur Diazotierung von Aminen der Formel II sind bekannt, z.B. aus den eingangs zitierten Schriften WO 2005/040490 und WO 2005/121439, auf deren diesbezügliche Offenbarung hiermit Bezug genommen wird. Die Kupplung der dabei erhaltenen Diazoniumsalze der Formel IIa (das Gegenion ist nicht dargestellt) 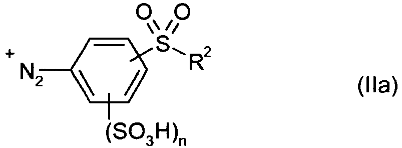 auf die Verbindung III kann in Analogie zu bekannten Verfahren der Azokupplung erfolgen, wie sie beispielsweise in EP 134192, WO 2005/040490 und WO 2005/121439 sowie in einschlägigen Monographien beschrieben werden (siehe z.B.: Grundlagen der Synthese von Zwischenprodukten und Farbstoffen. N.N. Woroshzow, Akademie-Verlag, Berlin, 1966 (493-524), Chemie der Azofarbstoffe, H. Zollinger, Birkhäuser-Verlag Berlin 1958, Künstliche organische Farbstoffe und ihre Zwischenprodukte, H. R. Schweizer, Springer-Verlag, Berlin-Göttingen-Heidelberg 1964 (416-495), H. Baumann, H. R. Hensel, Fortschritte der chemischen Forschung Bd. 7, 1967, 643-761 und darin zitierte Literatur).

Die Diazotierung von II und die Kupplung der dabei erhaltenen Diazoniumverbindung IIa auf die Pyrazolverbindung III erfolgt üblicherweise in einem wässrigen Reaktionsmedium unter pH-Kontrolle in an sich bekannter Weise.

Die Diazotierung von II erfolgt üblicherweise durch Umsetzung von II mit einem geeigneten Diazotierungsmittel in Gegenwart einer anorganischen Säure wie Salzsäure, Schwefelsäure etc., oder einer organischen Säure, z.B. einer organischen Sulfonsäure wie Benzolsulfonsäure, Toluolsulfonsäure oder einer organischen Carbonsäure wie Essigsäure, Propionsäure etc. Als Diazotierungsmittel sind grundsätzlich alle Substanzen geeignet, die unter Einwirkung von Säuren NO⁺-Ionen liefern. Als Diazotierungsmittel kommen neben anorganischen Nitriten wie Natrium- oder Kaliumnitrit auch organische Nitrite wie Amylnitrit, Butylnitrit, Isoamylnitrit, Neopentylglykoldinitrit etc. in Betracht. Vorzugsweise erfolgt die Diazotierung bei pH-Werten unterhalb pH 3. Die für die Diazotierung erforderlichen Reaktionstemperaturen liegen in der Regel im Bereich von 0°C bis 50°C und insbesondere im Bereich von 0 bis 30°C. Die erforderlichen Reaktionszeiten liegen üblicherweise im Bereich von 5 min bis 2 h und insbesondere im Bereich von 20 min bis 1 h. Ein etwaiger Überschuss an Diazotierungsmittel wird üblicherweise vor der Kupplung durch Zugabe geeigneter Agenzien wie Amidosulfonsäure zerstört.

Die für die Kupplung erforderlichen Reaktionstemperaturen liegen in der Regel im Bereich von 0°C bis 50°C und insbesondere im Bereich von 0 bis 30°C. Die erforderlichen Reaktionszeiten liegen üblicherweise im Bereich von 5 min bis 2 h und insbesondere im Bereich von 20 min bis 1 h. Der pH-Wert des Reaktionsgemischs liegt während der Kupplung typischerweise im Bereich von 3 bis 8, insbesondere im Bereich von 3,5 bis 7.

Die Kupplung von IIa mit III erfolgt üblicherweise stöchiometrisch, d.h. die Verbindungen IIa und III werden in der gewünschten Stöchiometrie miteinander umgesetzt. Die einzelnen Reaktanden können jedoch sowohl im Überschuss als auch im Unterschuss, bezogen auf die gewünschte Stöchiometrie eingesetzt werden. Die Abweichung von der gewünschten Stöchiometrie wird in der Regel nicht mehr als 20 mol-% und insbesondere nicht mehr als 10 mol-% betragen. Mit anderen Worten, bei der Umsetzung einer Diazoniumkomponente IIa mit einem Kupplungspartner III wird das Molverhältnis der beiden Komponenten im Bereich von 1:1,2 bis 1,2:1 und insbesondere im Bereich von 1,1:1 bis 1:1,1 liegen.

Die Gewinnung des Farbstoffs aus der wässrigen Reaktionsmischung erfolgt in an sich üblicher Weise, beispielsweise durch Eindampfen, insbesondere durch Sprühtrocknung der wässrigen Reaktionsmischung, durch Aussalzen des Farbstoffs und Trocknen des Pressguts. Das vorzugsweise noch feuchte Pressgut kann man erneut lösen, vorzugsweise in Wasser und man kann eine Dia- und/oder Ultrafiltration durchführen, um die bei der Herstellung anfallenden anorganischen Salze abzureichern und/oder die Lösung bezüglich des Farbstoffs anzureichern. Anschließend kann man den so aufgereinigten Farbstoff durch Sprühtrocknung aus der Lösung gewinnen.

Zur Herstellung einer Flüssigmarke bzw. einer Flüssigformulierung der Farbstoffs der Formel I kann der Farbstoffpresskuchen, bzw. das beim Eindampfen oder Sprühtrocknen erhaltene Farbstoffpulver aufgelöst werden, beispielsweise in Wasser, einem Wasser/Lösungsmittelgemisch, einer wässrigen Säure oder einer wässrigen Base, wobei die wässrige Säure und die wässrige Base ebenfalls Lösungsmittel enthalten können. Als Lösungsmittel kommen dabei insbesondere mit Wasser mischbare Lösungsmittel wie C₁-C₄-Alkanole, organische Carbonsäure wie Ameisensäure, Essigsäure und Propionsäure, Alkanolamine, Dialkanolamine und Trialkanolamine wie Ethanolamin, Diethanolamin, Triethanolamin, weiterhin, Amide wie Formamid, Acetamid, Dimethylformamid, Dimethylacetamid, N-Methylpyrrolidon, Dimethylsulfoxid und dergleichen in Betracht. Es ist auch möglich, direkt aus der Reaktionslösung eine Flüssigformulierung des Farbstoffs herzustellen. Gegebenenfalls ist es dann für eine ausreichend hohe Farbstoffkonzentration und für die Stabilität der Flüssigeinstellung erforderlich, eine Dia- und/oder Ultrafiltrationsprozess durchzuführen, um die bei der Herstellung anfallenden anorganischen Salze abzureichern und die Lösung aufzukonzentrieren.

Die zur Herstellung der Farbstoffe I benötigten Anilinverbindungen der Formel II sind bekannt, z.B. aus DE 2154943, DE 2538723, EP 753509 und der darin zitierten Literatur, oder können nach literaturbekannten Verfahren hergestellt werden.

Die Pyrazolverbindungen der Formel III sind ebenfalls bekannt, z.B. aus US 2,459,226 oder können in Analogie zu literaturbekannten Verfahren hergestellt werden (z.B. E. Schaumann (Hrsg.) in Houben-Weyl, Methoden der organischen Chemie, Georg Thieme Verlag, Stuttgart, 4. Auflage, Band E8b, Hetarene III, 2. Teil, 408-704 (1994)).

So gelingt beispielsweise die Herstellung von Verbindungen der Formel III, worin R¹ für CO₂H, CN oder CO₂-C₁-C₄-Alkyl steht, gemäß dem folgenden Reaktionsschema 1:

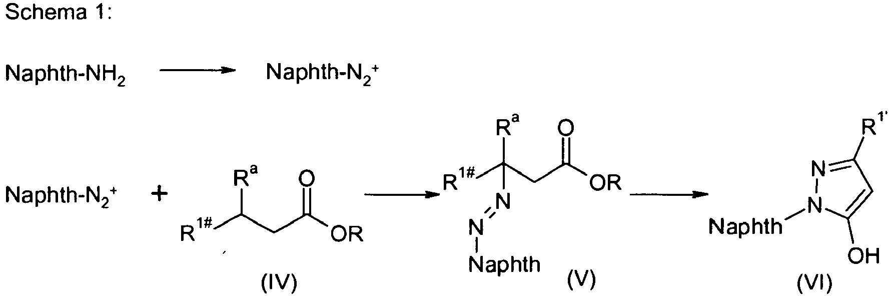

In Schema 1 hat Naphth eine der zuvor für Formel I angegebenen Bedeutungen. R steht für C₁-C₄-Alkyl, insbesondere für Methyl oder Ethyl. R^{1#} steht für CN oder CO₂-C₁-C₄-Alkyl, R^{1'} steht für CO₂H, CN oder CO₂-C₁-C₄-Alkyl. R^{a} steht für CO-C₁-C₄-Alkyl, insbesondere für Acetyl. In einem ersten Schritt wird eine 2-Aminonaphthalinsulfonsäure diazotiert und das dabei erhaltene Diazoniumsalz Naphth-N₂⁺ auf die Verbindung IV gekuppelt. Diazotierung und Kupplung können in der oben für die Kupplung von II auf III beschriebenen Weise erfolgen. Die Diazotierung erfolgt üblicherweise bei pH-Werten unterhalb pH 3, die Kupplung üblicherweise bei pH 3 bis 8, insbesondere bei pH 4,5 bis 6,5. Auf diese Weise erhält man die Monoazoverbindung der Formel V, das anschließend unter basischen Bedingungen zur Pyrazolverbindung der Formel VI (Verbindung der Formel III mit R¹ = CO₂H, CN oder CO₂-C₁-C₄-Alkyl) cyclisiert. Wenn R^{1#} in Formel IV für CO₂-C₁-C₄-Alkyl steht, kann man durch geeignete Wahl der Cyclisierungsbedingungen eine Verseifung erreichen, so dass Verbindungen der Formel VI mit R^{1'} = COOH erhalten werden.

Die Herstellung von Verbindungen der Formel III, worin R¹ für Wasserstoff oder C₁-C₄-Alkyl steht, gelingt beispielsweise gemäß dem folgenden Reaktionsschema 2:

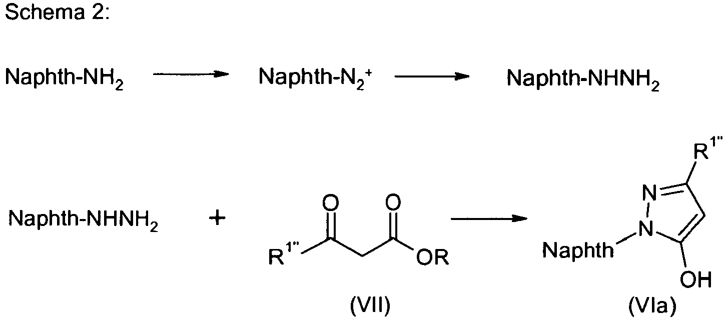

In Schema 2 hat Naphth eine der zuvor für Formel I angegebenen Bedeutungen. R steht für C₁-C₄-Alkyl, insbesondere für Methyl oder Ethyl. R^{1"} steht für Wasserstoff oder C₁-C₄-Alkyl. In einem ersten Schritt wird eine 2-Aminonaphthalinsulfonsäure diazotiert und das dabei erhaltene Diazoniumsalz Naphth-N₂⁺ wird zum Naphthylhydrazin Naphth-NHNH₂ reduziert, beispielsweise durch Umsetzung mit Natriumsulfit oder Natriumbisulfit. Die Diazotierung kann in der oben für die Kupplung von II auf III beschriebenen Weise erfolgen. Die Diazotierung erfolgt üblicherweise bei pH-Werten unterhalb pH 3, die Reduktion üblicherweise bei pH < 8, insbesondere bei pH 3 bis 6,5. Die Hydrazinverbindung kann in Form ihres Salzes isoliert oder ohne weitere Reinigung weiterverarbeitet werden. Zur Herstellung der Verbindung VIa wird die Hydrazinverbindung Naphth-NHNH₂ anschließend unter schwach basischen Bedingungen mit der 1,3-Dicarbonylverbindung zur Pyrazolverbindung der Formel VIa (Verbindung der Formel III mit R¹ = H oder C₁-C₄-Alkyl) cyclisiert.

Verbindungen der Formel III, worin R¹ für Halogen steht, können durch Halogenierung von Verbindungen der Formel III, worin R¹ für Wasserstoff steht oder durch halogenierende Decarboxylierung von Verbindungen der Formel III, worin R¹ für COOH steht, hergestellt werden.

Die erfindungsgemäßen Monoazofarbstoffe der Formel I sind in besonderer Weise zur Färbung von Leder geeignet. Dementsprechend betrifft die vorliegende Erfindung auch die Verwendung von Monoazofarbstoffen, wie hier und in den Ansprüchen definiert, zum Färben von Leder, insbesondere zum Färben unter alkalischen Bedingungen, d.h. bei pH-Werten von wenigstens 7,5, häufig bei pH-Werten im Bereich von 7,5 bis 12, insbesondere 8 bis 11 und besonders bevorzugt, 8,5 bis 10,5.

Die Erfindung betrifft daher auch ein Verfahren zum Färben von Leder, umfassend die Behandlung des Leders mit einer wässrigen Färbeflotte, die einen pH-Wert von wenigstens 7,5, häufig pH-Werte im Bereich von 7,5 bis 12, insbesondere 8 bis 11 und besonders bevorzugt 8,5 bis 10,5 aufweist und wenigstens einen Monoazofarbstoff der Formel I, wie hier beschrieben, oder ein Salz davon enthält. Durch den alkalischen pH-Wert wird eine Fixierung des Farbstoffs auf dem Leder erreicht, da unter diesen Bedingungen die Gruppe A mit den Aminogruppen des Leders unter Ausbildung einer kovalenten Bindung reagiert.

Um den für die Fixierung alkalischen pH-Wert zu erhalten, können beliebige Alkalien und Puffersysteme eingesetzt werden. Beispielhaft zu nennen sind Alkalimetallcarbonate und -hydrogencarbonate wie Natriumcarbonat, Kaliumcarbonat und Natriumhydrogencarbonat, weiterhin Alkalimetallhydroxide wie Natronlauge, Natriummetasilikat, Pyrophosphate wie Natrium- oder Kaliumpyrophosphat, Trikaliumphosphat, Trinatriumphosphat, Borax/Natronlauge-Puffer und Phosphat-Puffer.

Die zur Fixierung des Farbstoffs erforderlichen Temperaturen betragen vorteilhafterweise nicht mehr als 60°C, insbesondere nicht mehr als 50°C, und besonders bevorzugt nicht mehr als 40°C, so dass ein schonendes Färben des Leders möglich ist. In der Regel wird man die Färbung bei Temperaturen von wenigstens 10°C, vorzugsweise wenigstens 20°C, insbesondere wenigstens 30°C durchführen, um eine hinreichende Reaktionsgeschwindigkeit zu erzielen und somit den Färbevorgang zu beschleunigen. Grundsätzlich sind jedoch auch niedrigere Temperaturen möglich. Für organisch gegerbte Leder ist der bevorzugte Temperaturbereich 15 bis 50°C und besonders 30 bis 40°C. Für mit Metalloxiden gegerbte Leder ist ein Temperaturbereich von 15 bis 60 °C und besonders 30 bis 50 °C bevorzugt.

Für eine ausreichende Fixierung sind in der Regel abhängig vom pH-Wert und der Temperatur Behandlungsdauern von 0,5 h bis 4 h erforderlich. Die erforderlichen Behandlungsdauern kann der Fachmann anhand einfacher Routineexperimente für den jeweils eingesetzten Farbstoff ermitteln. Insbesondere bei stark alkalischen pH-Werten im Bereich von 9,5 bis 11, insbesondere bei 9,5 bis 10,5 beträgt die Färbedauer vorzugsweise nicht mehr als 2 h, z.B. 0,5 bis 2 h.

Bei der Färbung können auch Salze, beispielsweise Glaubersalz zugesetzt werden.

Neben den erfindungsgemäß zur Anwendung kommenden Farbstoffen der Formel I kann die Flotte auch weitere Reaktivfarbstoffe enthalten, die wenigstens eine Vinylsulfongruppe oder wenigstens eine an einen aromatischen Rest wie Phenyl gebundene Gruppe -SO₂-CH₂-CH₂-Q aufweisen, wobei Q eine der zuvor genannte Bedeutungen aufweist. Ihr Anteil wird sich nach dem gewünschten Farbton richten.

Üblicherweise wird der Farbstoff I je nach gewünschter Farbtiefe in einer Menge von wenigstens 0,0,05 Gew.-%, häufig wenigstens 0,1 Gew.-%, bezogen auf das Falzgewicht des eingesetzten Leders bzw. Halbfertigprodukts, eingesetzt, wobei die hier angegebenen Menge auf den Farbstoff einschließlich Synthesesalze und gegebenenfalls vorhandenes Stellmittel beziehen. Bezogen auf die farbigen, chemisch-organischen Bestandteile, wird man den Farbstoff der Formel I üblicherweise in einer Menge von wenigstens 0,01 Gew.-%, häufig wenigstens 0,0,05 Gew.-%, bezogen auf das Falzgewicht des eingesetzten Leders bzw. Halbfertigprodukts, einsetzen. In der Regel wird man den Farbstoff, gerechnet als Mischung aus organisch-chemischen Bestandteilen + Synthesesalze und gegebenenfalls vorhandenes Stellmittel, in einer Menge bis 20 Gew.-%, bzw. in einer Menge von bis zu 15 Gew.-%, gerechnet als farbige organischchemische Bestandteile und bezogen auf das Falzgewicht einsetzen, wobei auch größere Farbstoffmengen eingesetzt werden können. Zur Erreichung heller Töne wird man den Farbstoff typischerweise in Mengen von 0,05 bis 1,5 Gew.-%, insbesondere 0,1 bis 1 Gew.-% , bezogen auf das Falzgewicht des Leders bzw. Halbfertigprodukts und gerechnet als Mischung aus organisch-chemischen Bestandteilen + Synthesesalze einsetzen. Zur Erreichung mittlerer Töne wird man den Farbstoff typischerweise in Mengen von 0,8 bis 10 Gew.-%, insbesondere 1 bis 8 Gew.-%, bezogen auf das Falzgewicht des Leders bzw. Halbfertigprodukts und gerechnet als Mischung aus organisch-chemischen Bestandteilen + Synthesesalze einsetzen. Zur Erreichung tiefer (intensiver) Töne wird man den Farbstoff typischerweise in Mengen von 6 bis 20 Gew.-%, insbesondere 8 bis 16 Gew.-%, bezogen auf das Falzgewicht des Leders bzw. Halbfertigprodukts und gerechnet als Mischung aus organisch-chemischen Bestandteilen + Synthesesalze einsetzen.

Die wässrige Flotte kann übliche anionische Färbehilfsmittel, nichtionische oberflächenaktive Substanzen sowie für die Nachgerbung üblicherweise eingesetzte Wetend-Chemikalien, beispielsweise Gerbstoffe, z.B. polymere Nachgerbstoffe, synthetische Nachgerbstoffe, pflanzliche Gerbstoffe (Vegetabilgerbstoffe) sowie Fettungsmittel (Fettlicker) und Hydrophobiermittel enthalten. Wegen weiterer Details hierzu wird auf die WO 2005/040490 und die WO 2005/121439 verwiesen.

Als Nachgerbstoffe kommen für das erfindungsgemäße Verfahren alle handelsüblichen Systeme in Frage, z.B. Vegetabilgerbstoffe, Mineralgerbstoffe, Füllstoffe, synthetische Gerbstoffe (Synthane), Harzgerbstoffe, Polymergerbstoffe, Aldehyde, Dispergiermittel wie in US 5, 186 846 beschrieben und dergleichen:
Als Gerbstoffe können außerdem alle handelsüblichen Gerbstoffe wie beispielsweise Chromgerbstoffe, mineralische Gerbstoffe, Synthane, Polymergerbstoffe und vegetabile Gerbstoffe eingesetzt werden, wie sie z.B. in Ullmann's Encyclopedia of Industrial Chemistry, Band A 15 Seite 259 bis 282 und insbesondere Seite 268 ff, 5. Auflage, (1990), Verlag Chemie Weinheim, beschreiben werden. Handelsübliche Gerbstoffe können auch Mischungen der verschiedenen Gerbstoffklassen sein.

Als Fettungsmittel können alle in der Lederherstellung üblichen Fettungsmittel eingesetzt werden, insbesondere alle handelsüblichen Fettungsmittel. Fettungsmittel enthalten naturgemäß mindestens eine hydrophobe Substanz, die auf einem Kohlenwasserstoff basiert, beispielsweise auf einem natürlichen oder synthetischen Wachs, einem nativem oder synthetischen Öl oder auf einem nativen oder synthetischen Fett. Als Kohlenwasserstoffbasis für Fettungsmittel kommen auch Polyisobuten-basierte Substanzen in Betracht.

Als Hydrophobiermittel können im erfindungsgemäßen Verfahren alle für die Lederherstellung bekannten Hydrophobiermittel eingesetzt werden, insbesondere handelsübliche Systeme, wie sie in M. Hollstein: Bibliothek des Leders, Band 4 - Entfetten, Fetten, Hydrophobieren von Leder, 1983 beschrieben werden.

Neben anderen Fettungsmittelbestandteilen sind siliconbasierte Hydrophobiermittel und Hydrophobiermittel auf der Basis von Copolymeren von alpha-Olefinen mit Dicarbonsäureanhydriden umfangreich beschrieben worden, z.B. in EP-A 213480, WO 95/22627, WO 98/04748, EP-A 1087021 und WO 01/68584. Weitere Beispiele für Hydrophobiermittel findet man in WO 93/17130 und EP-A 372746.

Art und Menge von eingesetzten Gerbmitteln, Fettungsmitteln und Hydrophobiermitteln hängen von der Art des herzustellenden Lederartikels, der Art der Gerbung (Mineralgerbung oder metallfreie Gerbung), dem gewünschtem haptischem Profil und gefordertem physikalischem Verhalten in an sich bekannter Weise ab.

Dementsprechend setzt man zur Herstellung des Leders Gerbstoffe in den folgenden Mengen ein:
Polymergerbstoff (als Lösung eingestellt) in Mengen bis zu 20 Gew.-%, häufig 3 - 8 Gew.-% und/oder
Synthane (als Pulver gerechnet) in Mengen bis zu 30 Gew.-%, häufig 4 - 12 Gew.-% und/oder
Harzgerbstoff (als Pulver gerechnet) bis zu 15 Gew.-%, häufig 3 - 6 Gew.-% und/oder bis zu 30 Gew.-% vegetabilem Gerbstoff, häufig 4 - 12 Gew.-%,
wobei die Gesamtmenge an Gerbstoff üblicherweise bis 40 Gew.-%, z.B. 4 bis 40 Gew.-% und häufig 10 bis 40 Gew.-% beträgt, wobei alle Angaben auf das Feuchtgewicht des Leders bezogen sind.

Fettungs- und Hydrophobiermittel werden üblicherweise in den folgenden Mengen eingesetzt: bis zu 20 Gew.-% Fettungsmittel, häufig 6 - 12 Gew.-% und bis zu 20 Gew.-% Hydrophobiermittel, häufig 4 - 8 Gew.-%, jeweils auf das Feuchtgewicht des Leders bezogen.

Die Färbung kann sowohl einstufig als auch in 2 Stufen durchgeführt werden. Bei einer zweistufigen Färbung wird man zunächst in einer ersten Stufe das Leder mit der farbstoffhaltigen Flotte bei pH-Werten unterhalb 7,5, z.B. pH 3 bis 7,4 und vorzugsweise bei pH-Werten im Bereich von 4 bis 7,4 behandeln. Dieser Schritt dient zur gleichmäßigen Verteilung des Farbstoffs im Lederquerschnitt. Anschließend wird man in der zweiten Stufe bei pH-Werten von wenigstens 8, z.B. 8 bis 11, insbesondere 8,5 bis 10,5 und speziell 8,5 bis 10 den Farbstoff in der oben beschriebenen Weise fixieren. Es ist auch möglich die Färbung in einem Einstufenverfahren durchzuführen ohne eine Verteilungsstufe der Fixierstufe vorzuschalten.

Gegebenenfalls wird man im Anschluss an die Färbung einen Waschprozess durchführen, um nicht chemischen gebundenen Farbstoff sowie im Farbstoff enthaltene Verunreinigungen, beispielsweise Farbstoffe, die keine Gruppe A enthalten, zu entfernen. Dieser Waschprozess ist jedoch nicht zwingend erforderlich, da in vielen Fällen bereits eine quantitative oder nahezu quantitative Fixierung des Farbstoffs vorliegt. Sofern man einen Waschprozess nachschaltet, wird man nach dem Färben das Leder einmal oder mehrere Male, z.B. 1- bis 6- mal und insbesondere 1- bis 4- mal mit Wasser waschen. Die Menge an Wasser wird in der Regel nicht mehr als 300 Gew.-%, bezogen auf das Falzgewicht des Halbfertigprodukts, z.B. 100 bis 300 Gew.-% betragen. Die Waschdauer des einzelnen Waschschritts wird üblicherweise 5 bis 60 min und insbesondere 10 bis 30 min betragen.

Im Waschprozess können auch nichtionische, anionische, kationische oder auch zwitterionische Hilfsmittel eingesetzt werden. Bevorzugt sind handelsübliche ionische Hilfsmittel z.B auf Basis von Polyvinylformamiden, Polyvinylpyrolidonen, Vinylpyrolidon/Vinylimidazol- Copolymeren oder auf Kondensaten von Dicarbonsäure oder Dicarbonsäureanhydride mit Aminen oder von Naphthalinsulfonsäure mit Formaldehyd basieren können. Derartige Hilfsmitte werden beispielsweise in EP 0459 168, EP 0 520 182, US 5,342,916 und US 5,186 846 beschrieben.

Der Einsatz von Hilfsmitteln ist dann besonders sinnvoll, wenn im Farbstoff farbige Nebenprodukte enthalten sind oder wenn während der Fixierung farbige Nebenprodukte entstanden sind. Die Hilfsmittel stellen sicher, dass nicht mehr als dreimal, möglicherweise nur zweimal oder im Idealfall nur einmal gewaschen werden muss, um alle farbigen Nebenkomponenten quantitativ oder nahezu quantitativ zu entfernen.

Die Lederfärbung inklusive Nachgerbung, Fettung und Nachbehandlung erfolgt im Übrigen in an sich bekannter Weise, beispielsweise durch Färben im Walkfass oder in der Haspel. Derartige Verfahren sind ausführlich im Stand der Technik beschrieben, z.B. in: "Bibliothek des Leders", Band 3 (Gerbmittel, Gerbung und Nachgerbung) [1985], Band 4 (Entfetten, Fetten und Hydrophobieren bei der Lederherstellung) [1987] & Band 5 (Das Färben von Leder) [1987] Umschau Verlag; "Leather Technicians Handbook", 1983, von J. H. Sharphouse, publiziert von Leather Producers Association; und "Fundamentals of Leather Manufacturing", 1993, von E. Heidenmann, publiziert von Eduard Roether KG.

Die Färbung wird üblicherweise nach der Vorgerbung, d.h. vor, während oder nach der Nachgerbung durchgeführt. Die Färbung kann sowohl im gleichen Bad wie die Nachgerbung als auch in einem separaten Bad erfolgen. Vorzugsweise erfolgt die Färbung vor der Nachgerbung. Vorzugsweise erfolgt nach der Färbung und vor der Nachgerbung und Fettung einer oder mehrere der oben beschriebenen Waschschritte.

Dem Färbe- und Nachgerbvorgang schließt sich in der Regel ein Fettungsvorgang an, um die gewünschten haptischen Eigenschaften des Leders einzustellen. Nachgerbung und Fettung können jedoch auch in einem Prozessschritt durchgeführt werden. Der Verfahrensschritt Fettung kann an beliebiger Stelle des Wetendprozesses durchgeführt werden, bevorzugt ist die Durchführung am Ende des Wetendprozesses.

In der Regel wird man sowohl die Fettung als auch die Nachgerbung am Ende des Prozesses durch Absäuern fixieren, d.h. nach Färbung und gegebenenfalls Nachgerbung und Fettung folgt ein abschließendes Absäuern. Üblicherweise wird man zum Absäuern den pH Wert des wässrigen Behandlungsbads durch Zugabe einer Säure, insbesondere Ameisensäure, auf einen Wert unterhalb 3,7 einstellen.

Mit dem erfindungsgemäßen Verfahren können grundsätzlich alle Ledertypen, d.h. nicht nachgegerbte Halbfertigprodukte wie Metalloxid-gegerbtes Leder (wet-blue bei Chromoxid-Gerbung und wet-white bei Aluminiumoxid-Gerbung) und organisch, z.B. Aldehyd-gegerbtes Leder (wet-white) bwz. pflanzlich gegerbtes Leder, sowie nachgegerbte Halbfertigprodukte wie Borke oder Crustleder gefärbt werden.

Das erfindungsgemäße Verfahren ermöglicht insbesondere die Herstellung von gefärbten Ledern für beliebige Lederartikel, beispielsweise aus den Bereichen Schuh, Bekleidung, Automobil, Handschuh und Möbel. Das erfindungsgemäße Verfahren erlaubt auch die Herstellung von Taschenleder und von Reptilienleder für Accessoires. Die Einstellung der für den jeweiligen Lederartikel geforderten haptischen, mechanischen und physikalischen Eigenschaften erfolgt in an sich bekannter Weise durch eine für den jeweiligen Artikel geeignete Auswahl von Hilfsmitteln, Fettungsmitteln, Hydrophobiermitteln und Nachgerbstoffen.

Das nach dem erfindungsgemäßen Verfahren gefärbte Leder zeichnet sich auch bei sehr hoher Farbtiefe bzw. intensiven Färbungen durch ein exzellentes Echtheitsniveau aus. Besonders herausragend sind Reibechtheiten und insbesondere Licht-, Wasch-, Schweiß- und Migrationsechtheiten, was bei konventionell gefärbten Ledern nicht oder nur in sehr viel geringerem Ausmaß erreicht werden kann. Die nach dem erfindungsgemäßen Verfahren gefärbten Leder zeigen in Migrationsechtheitstests selbst bei hoher Feuchtigkeit und hohen Temperaturen, d.h. oberhalb 50 °C, z.B. 60 bis 100 °C keine oder nahezu keine Anschmutzung des Kontaktmaterials.

Qualitative und quantitative Bestimmung über UV/VIS Spektroskopie und HPLC zeigen, dass mit den erfindungsgemäßen Farbstoffen der Formel Fixiergrade zwischen 70 und 100% und häufig oberhalb 80 % oder gar 90 % erreicht werden.

Die folgenden Beispiele sollen die Erfindung näher erläutern, ohne sie einzuschränken:

### Herstellungsbeispiele:

### Beispiel 1:

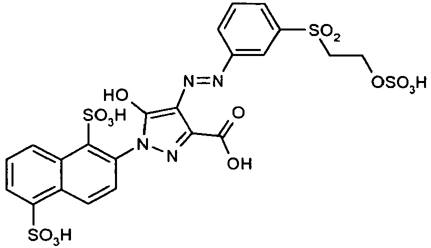

### Methode A:

1 mol 2-Amino-1,5-disulfonaphthalin (Iso-C-Säure) wurde mit überschüssigem Natriumnitrit und Salzsäure bei einer Temperatur von 0 - 5 °C diazotiert. Nach Wegnahme des Nitritüberschusses mit Amidosulfonsäure wurde die Diazoniumsalzlösung in eine Suspension aus 1,1 mol Acetylbemsteinsäuredimethylester in Wasser gegeben und der pH-Wert mit Soda auf 4,5 bis 6,5 angehoben. Nachdem keine Diazokomponente mehr nachweisbar war, wurde mit Natronlauge auf pH 12 - 13 gestellt und auf 40°C erwärmt. Man rührte noch eine Stunde bei dieser Temperatur nach. Nach dem Abkühlen auf Raumtemperatur und dem Absenken des pH-Wertes auf pH 6 - 7 mit Salzsäure erhielt man eine Lösung von 1-(1,5-Disulfonaphthalin-2-yl)-5-hydroxy-1H-pyrazol-3-carbonsäure in Wasser.
1,05 mol 3-(2-Hydroxysulfonylethyl)sulfonylanilin (Metabase Schwefelsäureester) wurde mit überschüssigem Natriumnitrit und Salzsäure bei einer Temperatur von 0 - 5 °C diazotiert. Nach Wegnahme des Nitritüberschusses mit Amidosulfonsäure wurde das Reaktionsgemisch zu einer Lösung von 1-(1,5-Disulfonaphthalin-2-yl)-5-hydroxy-1*H-*pyrazol-3-carbonsäure gegeben und der pH-Wert mit Soda auf 4,5 - 5 angehoben. Durch Sprühtrocknung der Lösung erhielt man ein gelbes Pulver (λₘₐₓ 426 nm), welches Leder in gelbem Farbton färbt.

### Methode B:

Die Methode B wird analog zu Methode A durchgeführt, mit dem Unterschied, dass die Diazotierung in Gegenwart von Schwefelsäure anstelle von Salzsäure durchgeführt wurde.

### Beispiel 2:

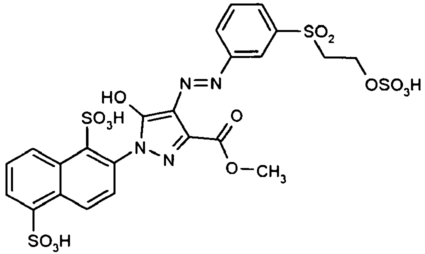

### Methode A:

1 mol Iso-C-Säure wurde mit überschüssigem Natriumnitrit und Salzsäure bei einer Temperatur von 0 - 5 °C diazotiert. Nach Wegnahme des Nitritüberschusses mit Amidosulfonsäure wurde die Diazoniumsalzlösung in eine Suspension aus 1,1 mol Acetylbernsteinsäuredimethylester in Wasser gegeben und der pH-Wert mit Soda auf 4,5 bis 6,5 angehoben. Nachdem keine Diazokomponente mehr nachweisbar war, wurde mit Natronlauge auf pH 8 - 9 gestellt und auf 30 - 40°C erwärmt. Man rührte noch eine Stunde bei dieser Temperatur nach. Nach dem Abkühlen auf Raumtemperatur und dem Absenken des pH-Wertes auf pH 6 - 7 mit Salzsäure erhielt man eine Lösung von 1-(1,5-Disulfonaphthalin-2-yl)-5-hydroxy-1*H*-pyrazol-3-carbonsäuremethylester in Wasser.
1,05 mol Metabase Schwefelsäureester wurde mit überschüssigem Natriumnitrit und Salzsäure bei einer Temperatur von 0 - 5 °C diazotiert. Nach Wegnahme des Nitritüberschusses mit Amidosulfonsäure wurde das Reaktionsgemisch zu einer Lösung von 1-(1,5-Disulfonaphthalin-2-yl)-5-hydroxy-1*H*-pyrazol-3-carbonsäuremethylester gegeben und der pH-Wert mit Soda auf 4,5 - 5 angehoben. Durch Sprühtrocknung der Lösung erhielt man ein gelbes Pulver (λₘₐₓ 426 nm), welches Leder in gelbem Farbton färbt.

### Beispiel 3:

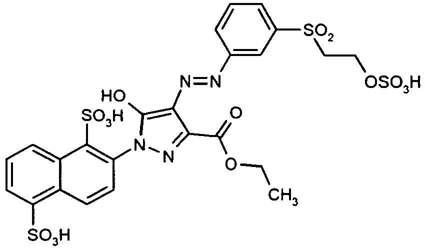

Die Herstellung des Farbstoffs aus Beispiel 3 erfolgte in Analogie zu der Vorschrift aus Beispiel 2 mit dem Unterschied, dass Acetylbernsteinsäurediethylester anstelle von Acetylbemsteinsäuredimethylester eingesetzt wurde.

### Beispiel 4:

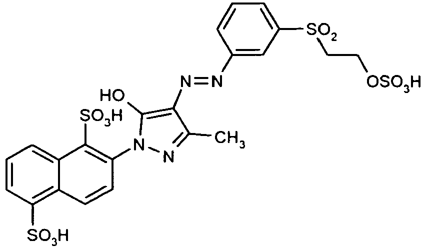

### Methode A:

1 mol Iso-C-Säure wurde mit überschüssigem Natriumnitrit und Schwefelsäure bei einer Temperatur von 0 - 5 °C diazotiert. Anschließend wurde die Diazoniumsalzlösung in eine wässrige Lösung von 3 mol Natriumbisulfit und 90 g Soda gegeben. Man ließ über Nacht bei Raumtemperatur rühren, versetzte mit 190 g Schwefelsäure und heizte auf 80°C für zwei Stunden, ließ abkühlen und filtrierte unter Vakuum.
Der Rückstand wurde sodann in Wasser bei 60 - 70 °C aufgenommen und mit Natronlauge neutralisiert. Bei 55 - 60°C wurden 1 mol Acetessigsäureethylester (oder Acetessigsäuremethylester) zugegeben und dabei der pH-Wert mit 33 g Soda schwach alkalisch gestellt. Nach beendeter Zugabe wurden 40 g Soda zugesetzt und für zwei Stunden unter Rückfluss erhitzt. Durch Zugabe von 500 g konzentrierter Salzsäure wurde das Pyrazolon gefällt, abgesaugt und mit Wasser gewaschen.
1,05 mol Metabase Schwefelsäureester wurde mit überschüssigem Natriumnitrit und Salzsäure bei einer Temperatur von 0-5 °C diazotiert. Nach Wegnahme des Nitritüberschusses mit Amidosulfonsäure wurde das Reaktionsgemisch zu einer Lösung des wie oben beschrieben hergestellten Pyrazolons gegeben und der pH-Wert mit Soda auf 4,5 - 5 angehoben. Durch Sprühtrocknung der Lösung erhielt man ein gelbes Pulver (λₘₐₓ 426 nm), welches Leder in gelbem Farbton färbt.

### Methode B:

Die Methode B wird analog zu Methode A durchgeführt mit dem Unterschied, dass das im ersten Reaktionsschritt hergestellt Hydrazin nicht zwischenisoliert, sondern direkt mit Acetessigester zum Pyrazolon umgesetzt wurde.

### Methode C:

Die Methode C wird analog zu Methode A oder Methode B durchgeführt mit dem Unterschied, dass das im zweiten Reaktionsschritt hergestellt Pyrazolon nicht zwischenisoliert, sondern direkt mit dem Diazoniumsalz zum gelben Farbstoff umgesetzt wurde.

### Beispiele 5 bis 56:

In der folgenden Tabelle sind weitere Beispiele nach der allgemeinen Formel I aufgeführt, die analog zu den Beispielen 1-4 hergestellt worden sind.

| Beispiel Nr. | Naphth | R¹ | Anker A | Farbton |
|---|---|---|---|---|
| 5 | 1,5-Bis(hydroxysulfonyl)-2-naphthyl | COOH | A13 | Gelb (λₘₐₓ 430 nm) |
| 6 | 1,5-Bis(hydroxysulfonyl)-2-naphthyl | COOCH₃ | A13 | Gelb |
| 7 | 1,5-Bis(hydroxysulfonyl)-2-naphthyl | COOC₂H₅ | A13 | Gelb |
| 8 | 1,5-Bis(hydroxysulfonyl)-2-naphthyl | CH₃ | A13 | Gelb |
| 9 | 1,5-Bis(hydroxysulfonyl)-2-naphthyl | COOH | A1 | Gelb (λₘₐₓ 408 nm) |
| 10 | 1,5-Bis(hydroxysulfonyl)-2-naphthyl | COOCH₃ | A1 | Gelb (λₘₐₓ 420 nm) |
| 11 | 1,5-Bis(hydroxysulfonyl)-2-naphthyl | COOC₂H₅ | A1 | Gelb |
| 12 | 1,5-Bis(hydroxysulfonyl)-2-naphthyl | CH₃ | A1 | Gelb |
| 13 | 1,5-Bis(hydroxysulfonyl)-2-naphthyl | COOH | A8 | Gelb (λₘₐₓ 408 nm) |
| 14 | 1,5-Bis(hydroxysulfonyl)-2-naphthyl | COOCH₃ | A8 | Gelb |
| 15 | 1,5-Bis(hydroxysulfonyl)-2-naphthyl | COOC₂H₅ | A8 | Gelb |
| 16 | 1,5-Bis(hydroxysulfonyl)-2-naphthyl | CH₃ | A8 | Gelb |
| 17 | 1-Hydroxysulfonyl-2-naphthyl | COOH | A15 | Gelb |
| 18 | 1-Hydroxysulfonyl-2-naphthyl | COOCH₃ | A15 | Gelb |
| 19 | 1-Hydroxysulfonyl-2-naphthyl | COOC₂H₅ | A15 | Gelb |
| 20 | 1-Hydroxysulfonyl-2-naphthyl | CH₃ | A15 | Gelb |
| 21 | 1-Hydroxysulfonyl-2-naphthyl | COOH | A13 | Gelb |
| 22 | 1-Hydroxysulfonyl-2-naphthyl | COOCH₃ | A13 | Gelb |
| 23 | 1-Hydroxysulfonyl-2-naphthyl | COOC₂H₅ | A13 | Gelb |
| 24 | 1-Hydroxysulfonyl-2-naphthyl | CH₃ | A13 | Gelb |
| 25 | 1-Hydroxysulfonyl-2-naphthyl | COOH | A1 | Gelb |
| 26 | 1-Hydroxysulfonyl-2-naphthyl | COOCH₃ | A1 | Gelb |
| 27 | 1-Hydroxysulfonyl-2-naphthyl | COOC₂H₅ | A1 | Gelb |
| 28 | 1-Hydroxysulfonyl-2-naphthyl | CH₃ | A1 | Gelb |
| 29 | 1-Hydroxysulfonyl-2-naphthyl | COOH | A8 | Gelb |
| 30 | 1-Hydroxysulfonyl-2-naphthyl | COOCH₃ | A8 | Gelb |
| 31 | 1-Hydroxysulfonyl-2-naphthyl | COOC₂H₅ | A8 | Gelb |
| 32 | 1-Hydroxysulfonyl-2-naphthyl | CH₃ | A8 | Gelb |
| 33 | 1,5,7-Tris(hydroxysulfonyl)-2-naphthyl | COOH | A15 | Gelb |
| 34 | 1,5,7-Tris(hydroxysulfonyl)-2-naphthyl | COOCH₃ | A15 | Gelb |
| 35 | 1,5,7-Tris(hydroxysulfonyl)-2-naphthyl | COOC₂H₅ | A15 | Gelb |
| 36 | 1,5,7-Tris(hydroxysulfonyl)-2-naphthyl | CH₃ | A15 | Gelb |
| 37 | 1,5,7-Tris(hydroxysulfonyl)-2-naphthyl | COOH | A13 | Gelb |
| 38 | 1,5,7-Tris(hydroxysulfonyl)-2-naphthyl | COOCH₃ | A13 | Gelb |
| 39 | 1,5,7-Tris(hydroxysulfonyl)-2-naphthyl | COOC₂H₅ | A13 | Gelb |
| 40 | 1,5,7-Tris(hydroxysulfonyl)-2-naphthyl | CH₃ | A13 | Gelb |
| 41 | 1,5,7-Tris(hydroxysulfonyl)-2-naphthyl | COOH | A1 | Gelb |
| 42 | 1,5,7-Tris(hydroxysulfonyl)-2-naphthyl | COOCH₃ | A1 | Gelb |
| 43 | 1,5,7-Tris(hydroxysulfonyl)-2-naphthyl | COOC₂H₅ | A1 | Gelb |
| 44 | 1,5,7-Tris(hydroxysulfonyl)-2-naphthyl | CH₃ | A1 | Gelb |
| 45 | 1,5,7-Tris(hydroxysulfonyl)-2-naphthyl | COOH | A8 | Gelb |
| 46 | 1,5,7-Tris(hydroxysulfonyl)-2-naphthyl | COOCH₃ | A8 | Gelb |
| 47 | 1,5,7-Tris(hydroxysulfonyl)-2-naphthyl | COOC₂H₅ | A8 | Gelb |
| 48 | 1,5,7-Tris(hydroxysulfonyl)-2-naphthyl | CH₃ | A8 | Gelb |
| 49 | 3,6-Bis(hydroxysulfonyl)-2-naphthyl | COOH | A1 | Gelb |
| 50 | 3,6-Bis(hydroxysulfonyl)-2-naphthyl | COOCH₃ | A15 | Gelb |
| 51 | 3,6-Bis(hydroxysulfonyl)-2-naphthyl | COOH | A1 | Gelb |
| 52 | 3,6-Bis(hydroxysulfonyl)-2-naphthyl | COOCH₃ | A15 | Gelb |
| 53 | 3,6,8-Tris(hydroxysulfonyl)-2-naphthyl | COOH | A1 | Gelb (λₘₐₓ 414 nm) |
| 54 | 3,6,8-Tris(hydroxysulfonyl)-2-naphthyl | COOCH₃ | A15 | Gelb (λₘₐₓ 425 nm) |
| 55 | 3,6,8-Tris(hydroxysulfonyl)-2-naphthyl | COOH | A1 | Gelb (λₘₐₓ 422 nm) |
| 56 | 3,6,8-Tris(hydroxysulfonyl)-2-naphthyl | COOCH₃ | A15 | Gelb (λₘₐₓ 410 nm) |

In der Tabelle 1 werden die Folgenden Abkürzungen verwendet:
Anker A steht für den Rest der Formel 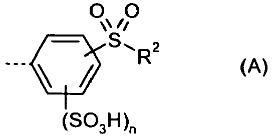 wobei die Bezeichnungen A1, A8, A13 und A15 die zuvor angegebenen Bedeutungen haben.

### Färbevorschriften:

Alle Angaben in Teilen sind als Gewichtsteile zu verstehen. Alle Angaben bezüglich Gerbstoffen, Hydrophobiermitteln, Fettlickern und Hilfsmitteln beziehen sich auf handelsübliche Produkte (Handelsware). Die Angaben bezüglich der Farbstoffe beziehen sich auf die Gesamtmenge an farbigen, organisch-chemischen Bestandteilen, gegebenenfalls herstellungsbedingt vorhandenen Salzen (Synthesesalze) und gegebenenfalls vorhandenen Stellmitteln.

Die Fixierausbeute wurde qualitativ mittels HPLC- und quantitativ mittels UV-VISspektroskopischer Untersuchung der Färbeflotte bestimmt. Hierzu werden 5 ml Proben nach der Färbung (pH <7), nach 60 min, 120 min, 180 min Fixierung (pH>7) und von jede Waschwasserflotte genommen und mit 1 ml Ameisensäurelösung auf pH 3-4 gestellt. Die Proben wurden mittels HPLC auf Farbstoff und seine Hydrolyseprodukte hin untersucht. Die Untersuchung erfolgte an HPLC Säulen Nucleodur C18 Gravity 3µ, CC70/2 und Hypersil 120-5 ODS, CC100/2 von der Firma Macherey-Nagel. Als Eluenten dienten Acetonitril / Puffer (1,6 g Tetrabutyammoniumhydrogensulfat, 6 g Dikaliumhydrogenphosphat-trihydrat in 1 L Wasser).

Die Bestimmung der Echtheiten erfolgte nach den folgenden, international anerkannten Normen:
- Schweißechtheit:: in Anlehnung an Veslic C4260
- Waschechtheit:: in Anlehnung an DIN EN ISO 15703
- Migrationsechtheit:: in Anlehnung an DIN EN ISO 15701, sowie durch 16 h Lagern bei 85 °C in einer Feuchte von 95 % unter ansonsten analogen Bedingungen zu DIN EN ISO 15701
- Reibechtheit:: in Anlehnung an DIN EN ISO 105 - X12 (Crockmeter, Reibung mit Baumwollgewebe) sowie in Anlehnung an DIN EN ISO 11640 (Veslic, Reibung mit Filz)
- Maeser:: in Anlehnung an ASTM D 2099
- Penetrometer:: in Anlehnung an DIN EN ISO 5403
- Wasserdampfdurchlässigkeit:: in Anlehnung an DIN EN ISO 14268
- Dauerfaltverhalten:: in Anlehnung an DIN EN ISO 5402
- Stichausreißversuch:: in Anlehnung an DIN 5331
- Weiterreißversuch:: in Anlehnung an DIN EN ISO 3377
- Zugfestigkeit:: in Anlehnung an DIN EN ISO 3376

Die folgenden Färbebeispiele sind exemplarisch zu verstehen und es kann jeder erfindungsgemäße Farbstoff nach der hier angegebenen Vorschriften zur Lederfärbung verwendet werden.

### Färbebeispiel 1:

Ein Lederstück von 100 Gewichtsteilen eines auf übliche Weise chromgegerbten Rindleders der Falzstärke 1,8 mm wurde in einem mit 300 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teilen Natriumbicarbonat und 1 Teil eines Dispergiermittels bestehenden Flotte 120 Minuten bei 35°C neutralisiert. Die Entsäuerungsflotte hatte dann einen pH-Wert von 6,8. Danach wurde das Leder mit 200 Teilen Wasser 10 Minuten bei 35°C gewaschen.
In einer frisch angesetzten Flotte aus 150 Teilen Wasser und 6 Teilen Farbstoff aus Beispiel (1) wurde 60 Minuten bei pH 7,2 und 30°C gefärbt. Durch portionsweise Zugabe von 10 Teilen Soda stellte man den pH-Wert der Flotte zwischen 9,2 - 10,1 ein und walkte 120 Minuten bei 40°C. Anschließend wurde die Flotte abgelassen und das gefärbte Leder dreimal in 300 Teilen Wasser bei 40°C für je 20 Minuten gewaschen. Durch Zugabe von 200 Teilen Wasser und 1,0 Teilen Ameisensäure wurde ein pH von 4,5 eingestellt.
Das derart gefärbte Leder wurde in einer frisch angesetzten Flotte aus 100 Teilen Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuert man mit 0,5 Teilen Ameisensäure auf pH 4,0 ab und walkte einmal 10 Minuten und einmal 30 Minuten. Nach einer 10-minütigen Waschoperation mit 200 Teilen Wasser bei 40°C wurde das Leder in neuer Flotte bestehend aus 100 Teilen Wasser, 4,5 Teilen eines Mischlickers (Basis sulfitiertes Fischöl und synthetisches Öl), 0,5 Teilen eines lanolinbasierten Lickers durch 40-minütiges Walken bei 55°C gefettet. Anschließend säuerte man mit 1,5 Teilen konzentrierte Ameisensäure auf pH 3,4 ab und walkte 40 Minuten. Das gefärbte und gefettete Leder wurde noch mit 15°C kaltem Wasser 10 Minuten gewaschen und anschließend ausgereckt, 1,5 Minuten bei 70°C vakuumiert, über Nacht bei Raumtemperatur hängegetrocknet, konditioniert, gestollt und gespannt. Man erhält ein intensiv gelb gefärbtes Rindleder in ausgezeichneter Egalität auf der Narbenseite und guter Durchfärbung.

### Färbebeispiel 2:

Ein Lederstück von 100 Gewichtsteilen eines auf übliche Weise chromgegerbten Rindleders der Falzstärke 1,8 mm wurde in einem mit 300 Teilen Wasser und 0,1 Teilen Ameisensäure gefüllten Wackerfass 10 Minuten bei 35°C gewaschen. Anschließend wird die Waschflotte abgelassen und das Leder in Flotte bestehend aus 100 Teilen Wasser, 2 Teilen Natriumformiat, 2,5 Teilen Natriumbicarbonat und 1 Teil eines Dispergiermittels 60 Minuten bei 35°C neutralisiert.
In die Flotte wurden 6 Teilen Farbstoff der Formel aus Beispiel 2 eingetragen und 30 Minuten bei pH 7,2 und 40°C gefärbt. Durch Zugabe von 8 Teilen Natronlauge 25%ig stellte man den pH-Wert der Flotte zwischen 10,1 - 10,5 ein und walkte 60 Minuten bei 40°C.
Anschließend wurde die Flotte abgelassen und das gefärbte Leder dreimal in 300 Teilen Wasser bei 40°C für je 20 Minuten gewaschen. Durch Zugabe von 200 Teilen Wasser und 1,0 Teilen Ameisensäure wurde ein pH von 4,5 eingestellt.
Das derart gefärbte Leder wurde in einer frisch angesetzten Flotte aus 100 Teilen Wasser und 3 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten wurden 5 Teile eines Sulfongerbstoffs und 3 Teile eines Harzgerbstoffs zugesetzt und weitere 60 Minuten gewalkt. Schließlich wurde mit 0,5 Teilen Ameisensäure auf pH 4,0 abgesäuert und weitere 10 Minuten nachgewalkt. Nach einer 10-minütigen Waschoperation mit 300 Teilen Wasser bei 40°C wurde das Leder in neuer Flotte bestehend aus 100 Teilen Wasser, 4,5 Teilen eines Mischlickers (Basis sulfitiertes Fischöl und synthetisches Öl) und 2 Teilen eines phosphatierten Lickers durch 40-minütiges Walken bei 50°C gefettet. Anschließend säuerte man mit 1,5 Teilen konzentrierte Ameisensäure auf pH 3,4 ab und walkte 40 Minuten. Das gefärbte und gefettete Leder wurde noch mit 15°C kaltem Wasser 10 Minuten gewaschen und anschließend ausgereckt, 1,5 Minuten bei 50°C vakuumiert, über Nacht bei Raumtemperatur getrocknet, konditioniert, gestollt, nochmals 2 Minuten vakuumgetrocknet, geschliffen, entstaubt und in feuchter Atmosphäre gemillt. Man erhält ein gelb gefärbtes Nubukleder mit sehr guter Durchfärbung und gleichmäßigem Schliff.

## Patentansprüche

1. Monoazofarbstoffe der allgemeinen Formel I 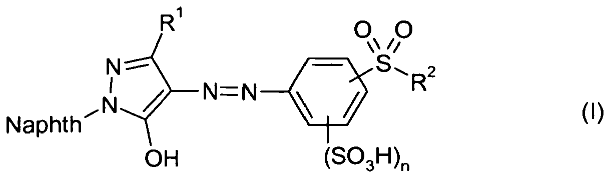 worin
n für 0, 1 oder 2 steht;
R¹ für Wasserstoff, C₁-C₄-Alkyl, COOH, C₁-C₄-Alkoxycarbonyl, C₁-C₄-Alkoxy, CN oder Halogen steht;
R² für eine Gruppe -CH=CH₂ oder CH₂-CH₂-Q steht, worin Q für eine unter alkalischen Bedingungen abspaltbare Gruppe steht,
Naphth für einen Rest der Formel X oder Y steht, 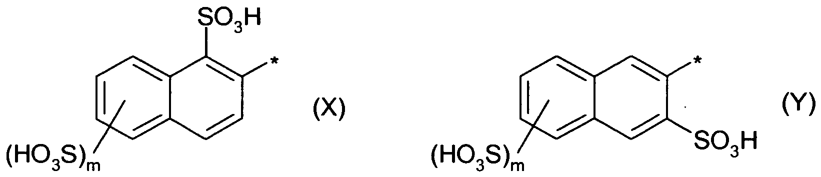 worin
m für 0, 1 oder 2 steht und * die Verknüpfung mit dem Stickstoff des Pyrazolrings bedeutet;
und die Salze davon.

2. Monoazofarbstoffe nach Anspruch 1, worin R¹ für CH₃, CO₂CH₃, CO₂CH₂CH₃ oder COOH steht.

3. Monoazofarbstoffe nach einem der vorhergehenden Ansprüche, worin die Gruppe Naphth für einen Rest der Formel X steht, worin m für 0 oder 1 steht.

4. Monoazofarbstoffe nach einem der vorhergehenden Ansprüche, worin m für 1 steht.

5. Monoazofarbstoffe nach Anspruch 3, worin die Gruppe Naphth für 1,5-Bis(hydroxysulfonyl)-2-naphthyl oder 1-Hydroxysulfonyl-2-naphthyl steht.

6. Monoazofarbstoffe nach einem der vorhergehenden Ansprüche, worin die Gruppe Naphth für einen Rest der Formel Y steht, worin m für 1 oder 2 steht.

7. Monoazofarbstoffe nach Anspruch 3, worin die Gruppe Naphth für 3,6-Bis(hydroxysulfonyl)-2-naphthyl oder 3,6,8-Tris(hydroxysulfonyl)-2-naphthyl steht.

8. Monoazofarbstoffe nach einem der vorhergehenden Ansprüche, worin R² für eine Gruppe CH₂-CH₂-Q steht, worin Q für -O-SO₃H steht.

9. Monoazofarbstoffe nach einem der vorhergehenden Ansprüche, worin n für 0 oder 1 steht.

10. Monoazofarbstoffe nach einem der Ansprüche 1 bis 7, worin die Gruppe 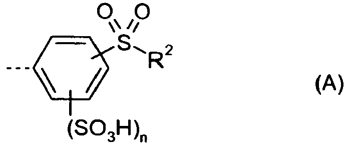 ausgewählt ist unter den Resten der Formeln A1 bis A18:

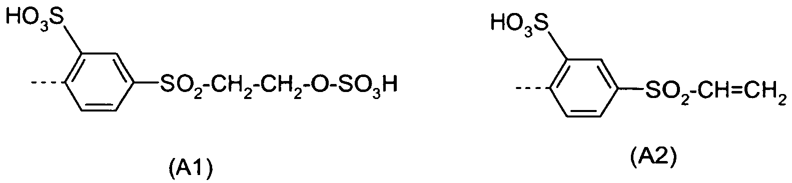

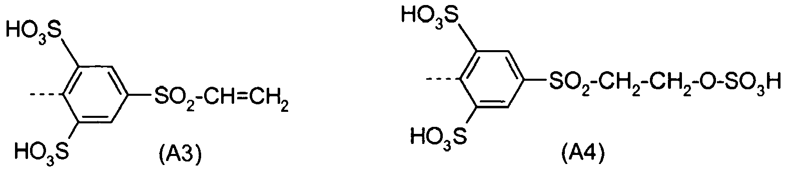

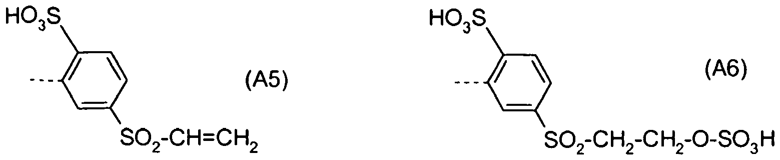

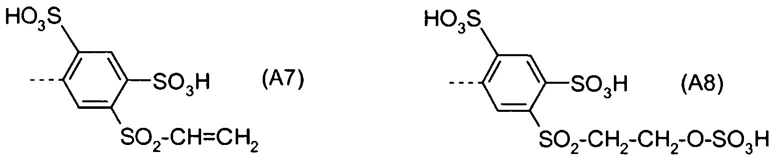

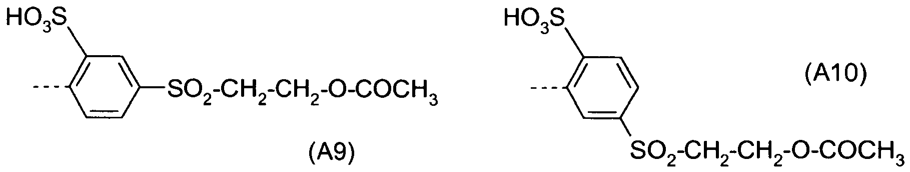

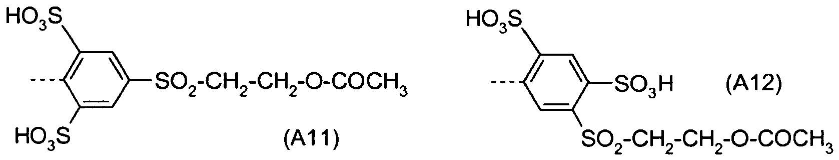

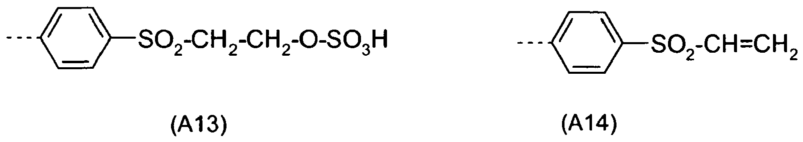

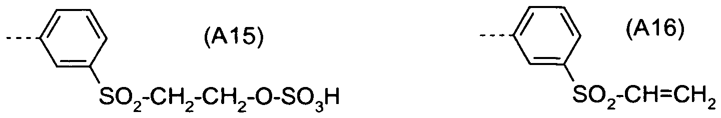

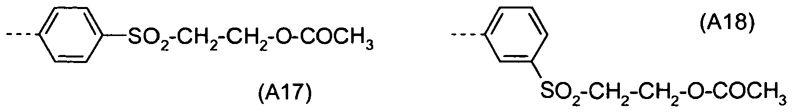

11. Monoazofarbstoffe nach Anspruch 10, worin die Gruppe A ausgewählt ist unter den Resten A1, A8, A13 und A15.

12. Verwendung von Monoazofarbstoffen gemäß einem der vorhergehenden Ansprüche zum Färben von Leder.

13. Verfahren zum Färben von Leder, umfassend die Behandlung des Leders mit einer wässrigen Färbeflotte, die einen pH-Wert von wenigstens 7,5 aufweist und wenigstens einen Monoazofarbstoff gemäß einem der Ansprüche 1 bis 11 enthält.

14. Verfahren zur Herstellung von Monoazofarbstoffen der Formel I gemäß einem der Ansprüche 1 bis 11, umfassend
a) Diazotieren einer Anilinverbindung der Formel II 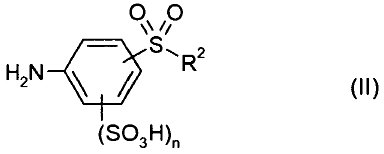 oder eines Salzes von II, worin n und R² die in Anspruch 1 angegebenen Bedeutungen aufweisen, wobei man das Diazoniumsalz von II erhält und
b) Kuppeln des Diazoniumsalzes von II auf eine Verbindung der Formel III, 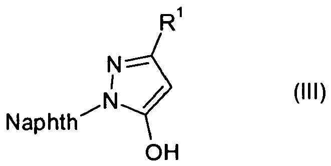 worin Naphth und R¹ die in einem der Ansprüche 1 bis 5 angegebenen Bedeutungen aufweisen.

## Claims

1. A monoazo dye of the general formula I 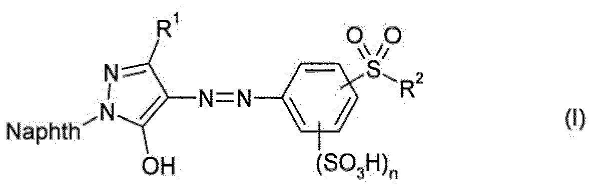 where
n represents 0, 1 or 2;
R¹ represents hydrogen, C₁-C₄-alkyl, COOH, C₁-C₄-alkoxycarbonyl, C₁-C₄-alkoxy, CN or halogen;
R² represents a group -CH=CH₂ or CH₂-CH₂-Q, where Q represents an alkali-detachable group,
Naphth represents a radical of the formula X or Y, 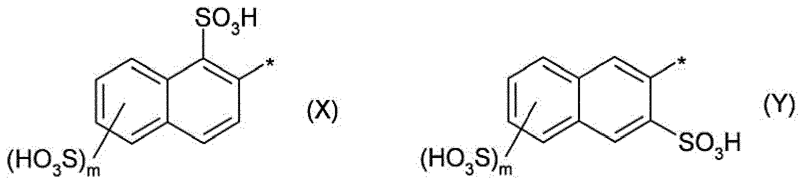 where
m represents 0, 1 or 2 and * denotes the linkage to the nitrogen of the pyrazole ring;
or a salt thereof.

2. The monoazo dye according to claim 1 wherein R¹ represents CH₃, CO₂CH₃, CO₂CH₂CH₃ or COOH.

3. The monoazo dye according to either of the preceding claims wherein Naphth represents a radical of the formula X where m represents 0 or 1.

4. The monoazo dye according to any one of the preceding claims wherein m represents 1.

5. The monoazo dye according to claim 3 wherein Naphth represents 1,5-bis(hydroxysulfonyl)-2-naphthyl or 1-hydroxysulfonyl-2-naphthyl,

6. The monoazo dye according to any one the preceding claims wherein Naphth represents a radical of the formula Y where m represents 1 or 2.

7. The monoazo dye according to claim 3 wherein Naphth represents 3,6-bis(hydroxysulfonyl)-2-naphthyl or 3,6,8-tris(hydroxysulfonyl)-2-naphthyl.

8. The monoazo dye according to any one of the preceding claims wherein R² represents a group CH₂-CH₂-Q, where Q represents -O-SO₃H.

9. The monoazo dye according to any one of the preceding claims wherein n represents 0 or 1.

10. The monoazo dye according to any one of claims 1 to 7 wherein the group 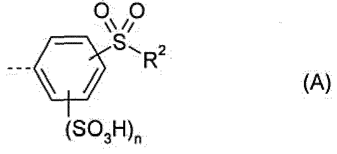 is selected from the radicals of the formulae A1 to A18:

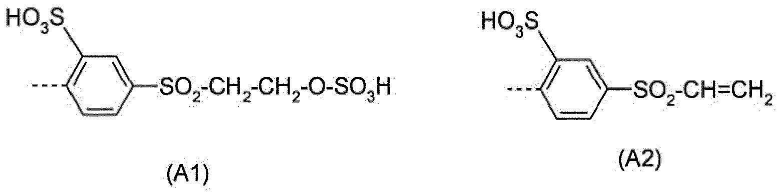

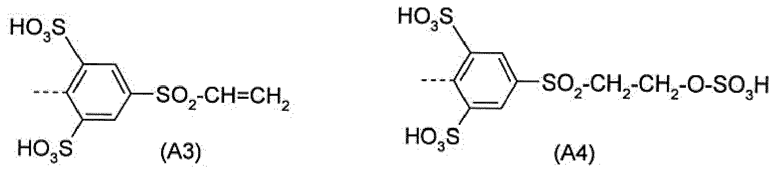

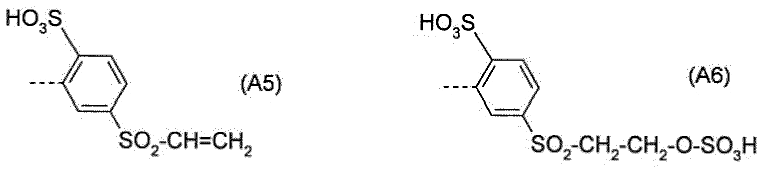

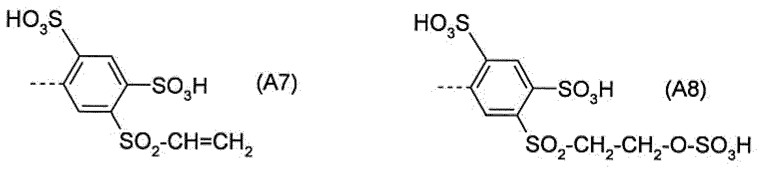

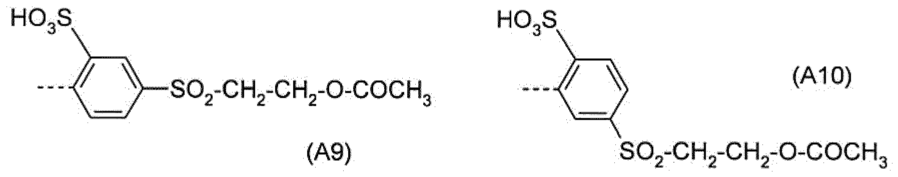

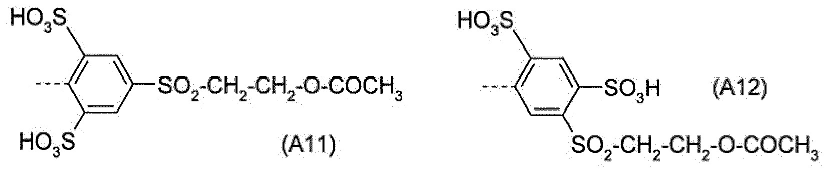

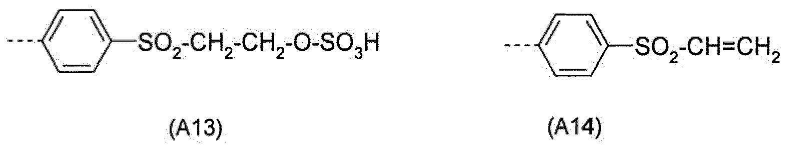

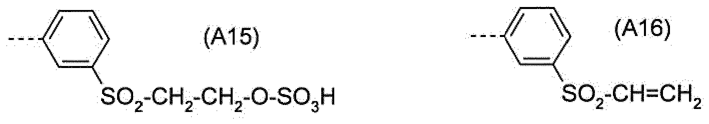

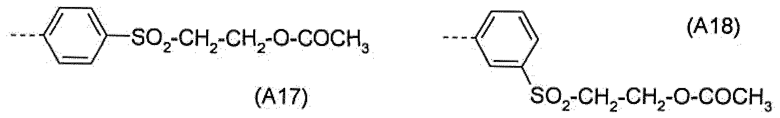

11. The monoazo dye according to claim 10 wherein the group A is selected from the radicals A1, A8, A13 and A15.

12. The use of a monoazo dye according to any one of the preceding claims for dyeing leather.

13. A process for dyeing leather, which comprises treating the leather with an aqueous dyeing float which has a pH of at least 7.5 and comprises at least one monoazo dye according to any one of claims 1 to 11.

14. A process for preparing a monoazo dye of the formula I according to any one claims 1 to 11, which comprises
a) diazotizing an aniline compound of the formula II 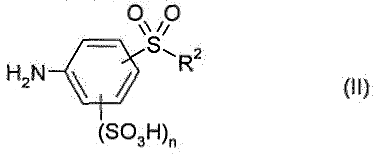 or a salt of II, where n and R² are each as defined in claim 1, to obtain the diazonium salt of II, and
b) coupling the diazonium salt of II onto a compound of the formula III, 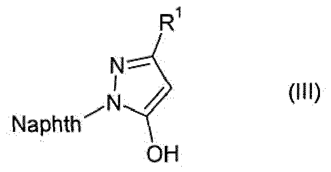 where Naphth and R¹ are each as defined in any one of claims 1 to 5.

## Revendications

1. Colorants monoazo de formule générale I 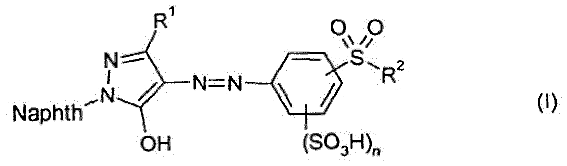 où
n vaut 0, 1 ou 2 ;
R¹ représente hydrogène, C₁-C₄-alkyle, COOH, C₁-C₄-alcoxycarbonyle, C₁-C₄-alcoxy, CN ou halogène ;
R² représente un groupe CH=CH₂ ou un groupe CH₂-CH₂-Q, où Q représente un groupe dissociable dans des conditions alcalines,
Naphth représente un radical de formule X ou Y, 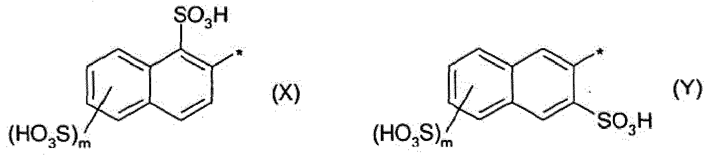
où
m vaut 0, 1 ou 2 et * signifie la liaison avec l'azote du cycle pyrazole ;
et leurs sels.

2. Colorants monoazo selon la revendication 1, où R¹ représente CH₃, CO₂CH₃, CO₂CH₂CH₃ ou COOH.

3. Colorants monoazo selon l'une quelconque des revendications précédentes, où le groupe Naphth représente un radical de formule X, dans laquelle m vaut 0 ou 1.

4. Colorants monoazo selon l'une quelconque des revendications précédentes, où m vaut 1.

5. Colorants monoazo selon la revendication 3, où le groupe Naphth représente 1,5-bis(hydroxysulfonyl)-2-naphtyle ou 1-hydroxysulfonyl-2-naphtyle.

6. Colorants monoazo selon l'une quelconque des revendications précédentes, où le groupe Naphth représente un radical de formule Y, dans laquelle m vaut 1 ou 2.

7. Colorants monoazo selon la revendication 3, où le groupe Naphth représente 3,6-bis(hydroxysulfonyl)-2-naphtyle ou 3,6,8-tris(hydroxysulfonyl)-2-naphtyle.

8. Colorants monoazo selon l'une quelconque des revendications précédentes, où R² représente un groupe CH₂-CH₂-Q, dans lequel Q représente -O-SO₃H.

9. Colorants monoazo selon l'une quelconque des revendications précédentes, où n vaut 0 ou 1.

10. Colorants monoazo selon l'une quelconque des revendications 1 à 7, où le groupe 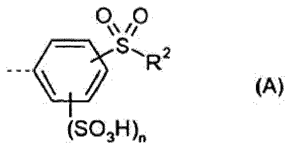 est choisi parmi les radicaux des formules A1 à A18 :

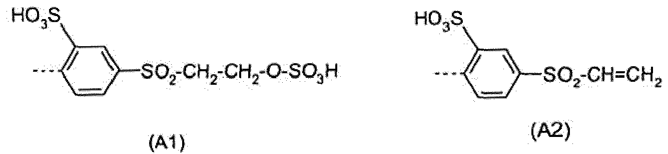

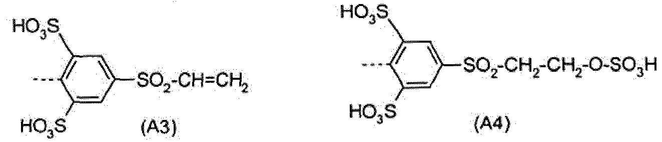

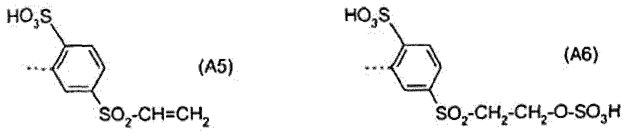

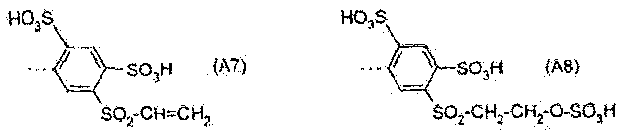

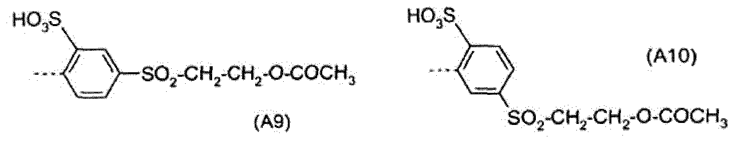

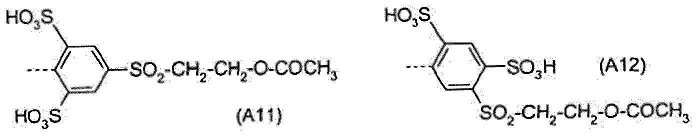

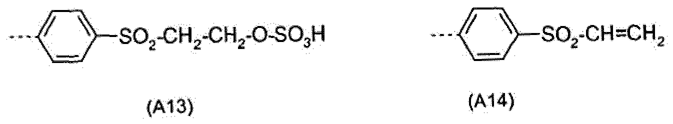

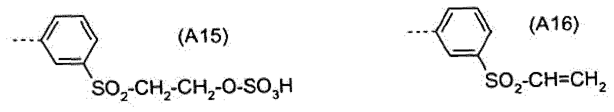

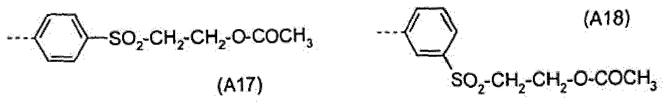

11. Colorants monoazo selon la revendication 10, où le groupe A est choisi parmi les radicaux A1, A8, A13 et A15.

12. Utilisation de colorants monoazo selon l'une quelconque des revendications précédents pour la teinture du cuir.

13. Procédé pour la teinture du cuir, comprenant le traitement du cuir avec un bain de teinture aqueux, qui présente un pH d'au moins 7,5 et qui continent au moins un colorant monoazo selon l'une quelconque des revendications 1 à 11.

14. Procédé pour la préparation de colorants monoazo de formule I selon l'une quelconque des revendications 1 à 11, comprenant
a) la diazotation d'un composé aniline de formule II 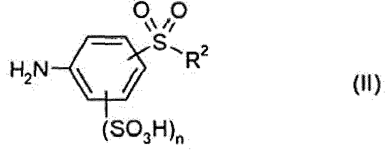 ou d'un sel de II, où n et R² présentent les significations indiquées dans la revendication 1, avec obtention du sel de diazonium de II et
b) couplage du sel de diazonium de II sur un composé de formule III 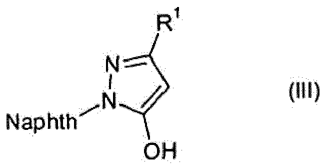 où Naphth et R¹ présentent les significations indiquées dans l'une quelconque des revendications 1 à 5.
